(19) Europäisches Patentamt
European Patent Office
Office européen des brevets

(11) **EP 3 274 820 B1**

(12) **EUROPEAN PATENT SPECIFICATION**

(45) Date of publication and mention
of the grant of the patent:
**05.08.2020 Bulletin 2020/32**

(51) Int Cl.:
*G06F 9/44* *(2018.01)*  *G06F 21/16* *(2013.01)*
*G06F 8/75* *(2018.01)*  *G06F 21/44* *(2013.01)*

(21) Application number: **16769662.4**

(22) Date of filing: **24.03.2016**

(86) International application number:
**PCT/US2016/023940**

(87) International publication number:
**WO 2016/154396 (29.09.2016 Gazette 2016/39)**

(54) **SYSTEMS AND METHODS FOR DETECTING COPIED COMPUTER CODE USING FINGERPRINTS**

SYSTEME UND VERFAHREN ZUR DETEKTION EINES KOPIERTEN COMPUTERCODES MIT FINGERABDRÜCKEN

SYSTÈMES ET PROCÉDÉS PERMETTANT DE DÉTECTER UN CODE INFORMATIQUE COPIÉ, À L'AIDE D'EMPREINTES DIGITALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2015 US 201562138543 P**

(43) Date of publication of application:
**31.01.2018 Bulletin 2018/05**

(73) Proprietor: **Terbium Labs, Inc.**
**Baltimore, Maryland 21230 (US)**

(72) Inventors:
 • **ROGERS, Daniel J.**
 **Baltimore, Maryland 21230 (US)**
 • **MOORE, Michael**
 **Baltimore, Maryland 21230 (US)**
 • **BLAZAKIS, Dionysus**
 **Baltimore, Maryland 21230 (US)**

(74) Representative: **Kleine, Hubertus et al**
**Loesenbeck - Specht - Dantz**
**Patent- und Rechtsanwälte**
**Am Zwinger 2**
**33602 Bielefeld (DE)**

(56) References cited:
| | |
|---|---|
| **US-A- 5 752 241** | **US-A1- 2011 246 968** |
| **US-A1- 2012 254 830** | **US-A1- 2012 317 421** |
| **US-A1- 2013 036 129** | **US-A1- 2013 036 129** |
| **US-A1- 2013 166 600** | **US-A1- 2014 090 067** |
| **US-A1- 2014 223 565** | **US-A1- 2014 223 565** |
| **US-B1- 6 381 739** | **US-B1- 8 997 256** |

 • **CHRISTIAN S COLLBERG ET AL: "Dynamic graph-based software fingerprinting", ACM TRANSACTIONS ON PROGRAMMING LANGUAGE AND SYSTEMS, ACM, NEW YORK, NY, vol. 29, no. 6, 1 October 2007 (2007-10-01), pages 35-es, XP058302116, ISSN: 0164-0925, DOI: 10.1145/1286821.1286826**

**Description**

**CROSS REFERENCE TO RELATED APPLICATIONS**

This application claims the benefit of Provisional Application 62/138,543, filed March 26, 2015. This application is related to Provisional Application 61/973,125, filed March 31, 2014, U.S. Non-Provisional Application 14/314,307, filed June 25, 2014, and U.S. Non-Provisional Application 14/621,554, filed February 13, 2015.

BACKGROUND OF THE INVENTION

Software theft has been, and continues to be, pervasive. Individuals and companies typically try various techniques to combat software theft, including requiring a unique software key to install software, requiring online activation of software, requiring an active online connection to use software, encryption of software, and the like. Although these techniques typically prevent casual users from installing unauthorized copies, the techniques can typically be overcome by sophisticated users.

Another way to combat software theft is to try to identify the source of the stolen software using watermarks. This involves applying unique watermarks to each copy of the software so that when a stolen piece of software is found, the watermark in the stolen software will corresponding to one of the unique watermarks in the authorized software. This requires modification of the computer code, which is undesirable. Further, this technique can be overcome by removing the watermark from the stolen software or removing the watermark from the authorized software so that all further copies do not contain the unique watermark.

US 2014/0223565 discloses a technique for using dynamic decimation of token sequence N-grams to identify similarity between binary code. The binary code is initially converted to a canonical source code, which is then broken into source code functions. Each of the source code functions is broken down into smaller units represented as function source code tokens, each of which "is mapped to a compact symbol or alphabet character to define a fingerprint 380 (or functional DNA string)." This fingerprinting technique does not involve generating a block rank score for each block in the first and second functions, generating a path of blocks of the first function and second functions based on the block rank score of each block, or generating the first and second fingerprints using the generated path of blocks of the first and second functions, respectively. Further, this fingerprinting technique does not involve that the generation of a block rank score for each block in the first and second functions involves reversing all edges in a control flow graph for the first and second functions and assigning a block rank score to each block based on block rank scores of blocks having a forward path to the each block. US 2014/0223565 also discloses that after fingerprints have been generated, an n-gram scorer can be used to compare two different generated fingerprints. This scoring occurs after the fingerprints have been generated. The article "Dynamic Graph-Based Software Fingerprinting" by Collberg et al. discloses using the Collberg-Thomborson (CT) algorithm to generate a fingerprint that is embedded in a program. This algorithm is a dynamic algorithm that is executed when the program is executed so that the fingerprint can be extracted from the executing program. This article discloses techniques that attempt to mitigate the issues noted above in connection with software watermarks.

SUMMARY OF THE INVENTION

In addition to the issues identified above with the known techniques for combating software theft, these techniques focus on the software as a whole, and thus cannot identify when only portions of the underlying code are stolen. For example, if a watermark were applied to the software, the watermark would not appear in the stolen software if less than the entire code were used. Similarly, if software theft were identified by comparing hash values generated from the authorized and stolen software, the hash values would not match when less than the entire underlying code is present in the stolen software. Thus, a thief could simply modify some portion of the code to defeat these techniques. Further, it is often the case that only a portion of the underlying code is truly unique and provides the overall value to the software, and accordingly a thief may only want to use this unique portion in different software. For example, a thief could copy one or several functions from someone else's software and incorporate the function(s) in his/her own software. Because these functions may comprise only a small part of the overall code in the thief's software, simple watermarking and hash value techniques across an entire set of code would not identify this theft of several functions from someone else's code.

Exemplary embodiments of the present invention are directed to techniques for combating software theft by identifying whether at least a portion of one piece of software appears in another piece of software. Thus, the present invention allows the identification of whether portions of one piece of software appear in a different piece of software, even when the overall operation of the two pieces of software is different. The inventive technique is particularly useful because it operates using compiled computer binaries, and thus does not require access to the underlying source code.

The present invention is defined in the independent claims. Preferred embodiments are defined in the dependent claims. In accordance with exemplary embodiments of the present invention, fingerprints are generated for functions in compiled computer binaries. The fingerprint generation involves generating a block rank score for each block of a function and then generating order list of blocks in a path through the function using the block rank scores. The comparison of fingerprints involves the use of the ordered list of blocks for each corresponding function to identify similarities between the fingerprints.

BRIEF DESCRIPTION OF THE DRAWINGS

Figure 1 is a flow diagram of the overall process of exemplary embodiments of the present invention;
Figure 2 is a block diagram of an exemplary system for generating and matching fingerprints in accordance with the present invention;
Figure 3 is a flow diagram of an exemplary process for generating a fingerprint using binary code in accordance with the present invention;
Figure 4 is a block diagram of an exemplary call graph in accordance with the present invention;
Figure 5 is a block diagram of an exemplary control flow graph in accordance with the present invention;
Figure 6 is a block diagram of an exemplary fingerprint in accordance with the present invention;
Figures 7A and 7B are flow diagrams of an exemplary process for matching fingerprints in accordance with the present invention;
Figure 8 is a flow diagram of an exemplary fingerprinting technique in accordance with another embodiment of the present invention;
Figure 9 is a block diagram illustrating application of block ranking to an exemplary function in accordance with the present invention;
Figures 10A and 10B are flow diagrams of an exemplary process for matching fingerprints in accordance with another embodiment of the present invention; and
Figures 11A-11C are block diagrams illustrating exemplary arrays used for calculating fingerprint similarity scores in accordance with the present invention.

DETAILED DESCRIPTION OF THE DRAWINGS

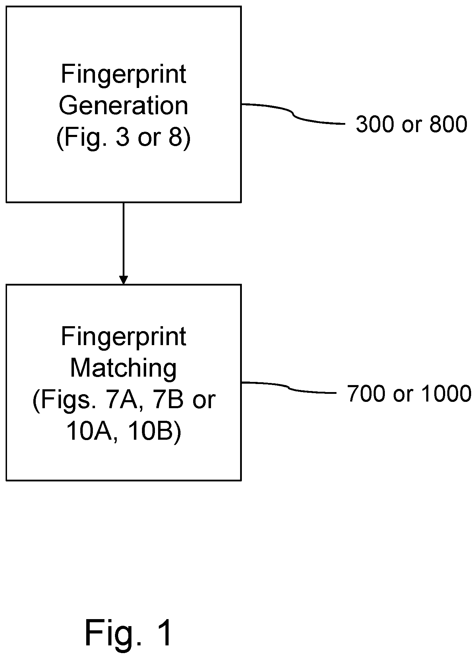

Figure 1 is a flow diagram of the overall process of exemplary embodiments of the present invention. As illustrated in Figure 1, the overall process involves generating a fingerprint from compiled computer binaries (step 300 or 800) and matching the generated fingerprints to determine whether there is sufficient similarity (step 700 or 1000). It should be recognized that fingerprint generation from compiled computer binaries that are later compared for matching can be performed at approximately the same time or can be performed at different times. For example, a fingerprint of a first compiled computer binary can be generated for purposes of identifying theft of the underlying code. Other compiled computer binaries can then be collected over a period of time, and then fingerprints can be generated using the other compiled computer binaries for comparison with the first compiled computer binaries. These other compiled computer binaries can be obtained in any manner, such as, for example, using a web spider that crawls across the Internet and collects compiled computer binaries. The other compiled computer binaries can also be manually input. For example, the owner of a first compiled computer binary may suspect that a second compiled computer binary contains code stolen from the first compiled computer binary. In this case, the fingerprints can be generated from the first and second compiled computer binaries at approximately the same time and then compared using the inventive fingerprint matching technique.

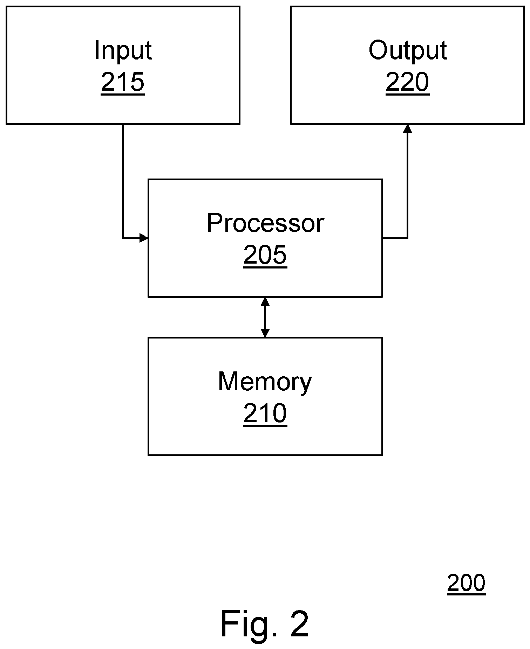

Figure 2 is a block diagram of an exemplary system for generating and matching fingerprints in accordance with the present invention. The system 200 can comprise one or more computers that include a processor 205 coupled to memory 210, input 215, and output 220. The disclosed processes can be performed by processor 205 executing computer code stored in memory 210. Processor 205 can be any type of processor, including a microprocessor, field programmable gate array (FPGA), and/or an application specific integrated circuit (ASIC). Memory 210 can be any type of non-transitory memory. In addition to storing computer code for executing the processes described herein, memory 210 can also store the generated fingerprints. Alternatively or additionally, a separate storage medium can store the generated fingerprints. For example, the computer binaries, fingerprints, and comparison scores can be stored in a distributed file system and non-relational, distributed database. Input 215 provides mechanisms for controlling the disclosed processes, including, for example, a keyboard, mouse, trackball, trackpad, touchscreen, etc. Further, input 215 can include a connection to an external storage device for providing compiled computer binaries, such as an external hard drive or flash storage memory, as well as a network connection. Output 220 can include a display, printer, and/or the like. Additionally, output 220 can include a network connection for notifying an owner of a compiled computer binary of any identified potential infringement, such as by electronic mail, posting on a website or webpage, a text message, and/or the like.

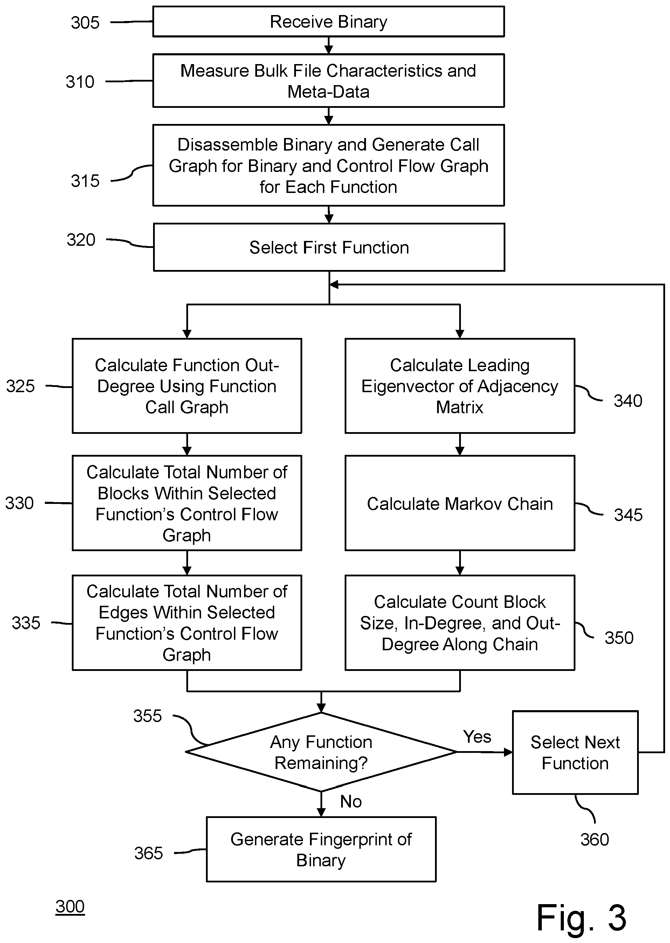

Figure 3 is a flow diagram of an exemplary process for generating a fingerprint using binary code in accordance with the present invention. This process is performed using the system of Figure 2. Initially, processor 205 receives a compiled computer binary (step 305) via input 215 and/or memory 210 and measures bulk file characteristics and meta-data (step 310). Next, processor 205 disassembles the compiled computer binary, generates a call graph from the disassembled binary, and generates control flow graphs for each function in the call graph (step 315). Once the compiled computer binary is disassembled, the remainder of the processing can be performed independent of the particular language, operating system, or architecture that the code was written for.

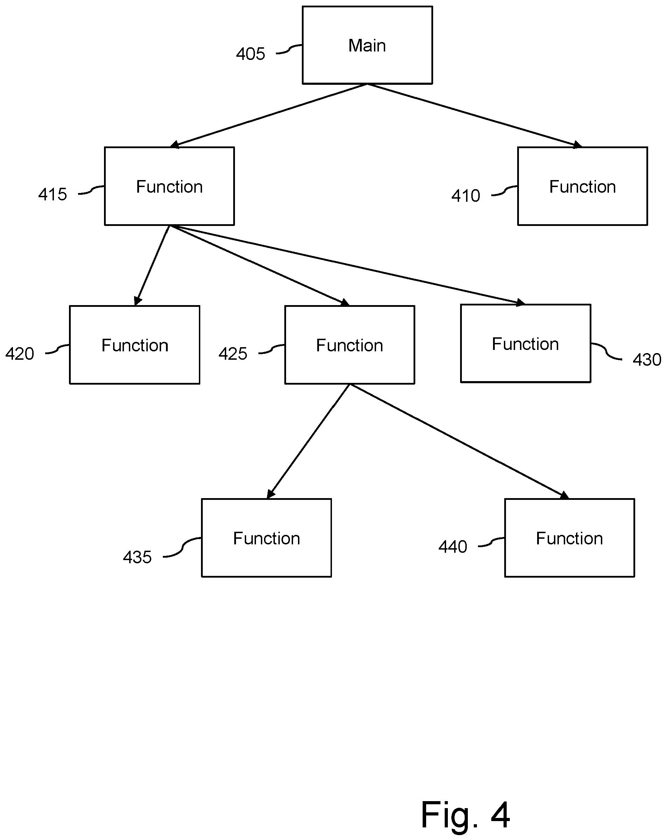

Figure 4 is a block diagram of an exemplary call graph in accordance with the present invention. As will be appreciated by those skilled in the art, a call graph describes the relationship between various functions in a compiled binary. Thus, in Figure 4, a main function 405 (also commonly referred to as a routine) has calls to sub-functions 410 and 415 (also commonly referred to as sub-routines). In turn, function 415 has calls to functions 420, 425, and 430, and function 425 has calls to functions 435 and 440. Those skilled in the art will recognize that in a call graph each function is commonly referred to as a node and the connections between functions are commonly referred to as edges. It will be recognized that the call graph of Figure 4 is a highly simplified graph and that compiled computer binaries typically will be disassembled into much more extensive call graphs.

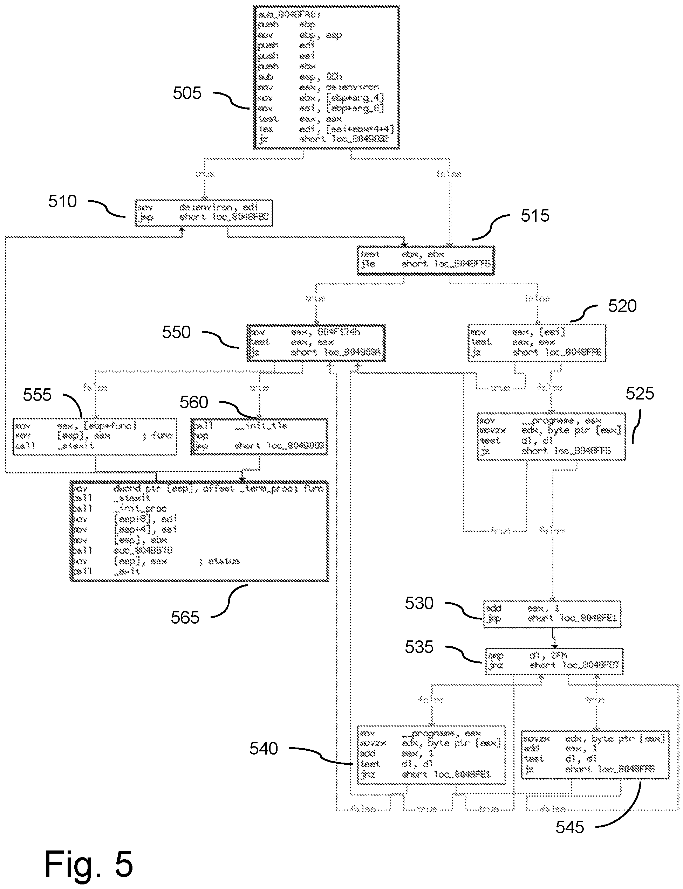

Figure 5 is a block diagram of an exemplary control flow graph in accordance with the present invention. Those skilled in the art will recognize that a control flow graph for a function describes all possible paths that may be traversed during execution of the particular function. Examples of paths that may be executed in the function of Figure 5 include blocks 505, 515, 520, 525, 530, 535, and 545; 505, 515, 520, 525, 530, 535, 540, 550, 560, and 565; 505, 510, 515, 550, 560, and 565; and 505, 510, 515, 550, 555, and 565. In addition to these paths, any path with connections illustrated in Figure 5 can be traversed during the execution of the function. Further, it should be recognized that this is merely an exemplary function and that other functions are within the scope of the invention.

Returning to Figure 3, after processor 205 generates the control flow graphs for each function (step 315), processor 205 selects one of the functions for processing (step 320). As illustrated, this processing is performed along two parallel paths. It should be recognized, however, that these two paths can be performed serially, if desired. It should also be recognized that this parallel processing does not require all of the control flow graphs to be generated, and accordingly this parallel processing can be performed as control flow graphs are generated. Turning to the path on the left-hand side of Figure 3, first processor 205 calculates the function out-degree using the call graph for the particular function (step 325). The function out-degree represents the number of paths or calls from a particular function to other functions in the call graph. Next processor 205 calculates the total number of blocks within the selected function's control flow graph (step 330), and finally processor 205 calculates the total number of edges within the selected function's control flow graph (step 335). The edges in the control flow graph are the connections between the different blocks within this graph.

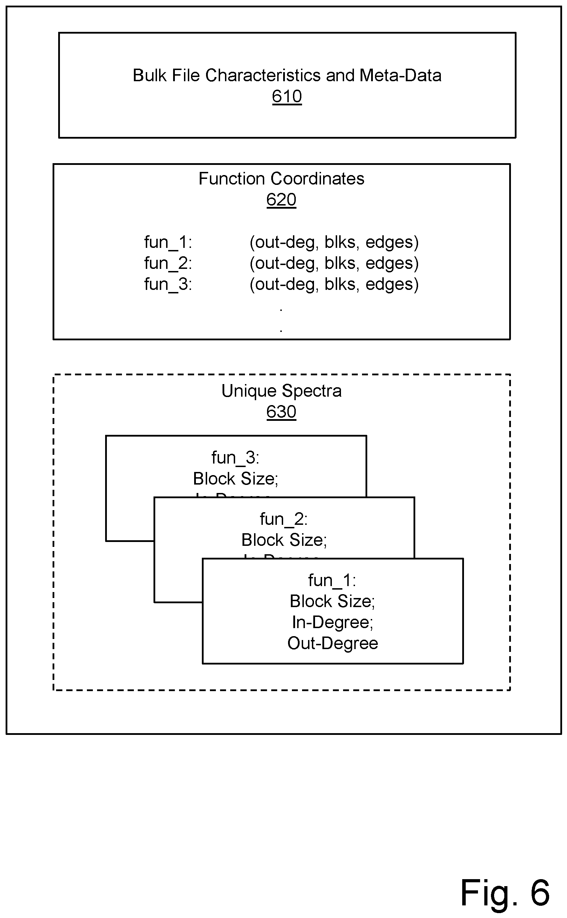

Turning now to the path on the right-hand side of Figure 3, first processor 205 calculates the leading Eigenvector of the adjacency matrix (step 340). The adjacency matrix is comprised of the function coordinates 620 (described below in connection with Figure 6). Next, processor 205 calculates the Markov chain (step 345). The Markov chain is calculated starting with the leading Eigenvector and then appending connected nodes corresponding with successively smaller elements of the leading Eigenvector. The Markov chain provides a good low-rank approximation, or serialization, of the control flow graph that is relatively unique and particularly well-suited for further statistical analysis of the control flow graph.

Processor 205 then calculates count block size, in-degree, and out-degree along the Markov chain (step 350). These three spectra are relatively unique among and within compiled computer binaries. An example of the count block size, in-degree, and out-degree will now be described in connection with Figure 5, and assuming a chain between the blocks as follows: 505=>515=>550=>560=>565. In this example the block count spectrum would be [12, 2, 3, 3, 9] because block 505 has 12 instructions, block 515 has two instructions, blocks 550 and 560 each have three instructions, and block 565 has nine instructions. The in-degree spectrum would be [0, 2, 3, 1, 2] because block 505 does not have any incoming edges, block 515 has two incoming edges, block 550 has three incoming edges, block 560 has one incoming edge, and block 565 has two incoming edges. The out-degree spectrum would be [2, 2, 2, 1, 1] because blocks 505, 515, and 550 each have two outgoing edges and blocks 560 and 565 each have two outgoing edges. The values for each spectra and ordering of values provides a unique signature for a particular control flow graph that can be used to identify other functions that have the same or similar unique signatures.

After the processing of the two parallel paths is complete, processor 205 determines whether there are any further functions to process (step 355). If there are ("Yes" path out of decision step 355), then the next function is selected (step 360) and the parallel processing is repeated. If not ("No" path out of decision step 355), then processor 205 generates the fingerprint of the binary using the calculated information (step 365).

Figure 6 is a block diagram of an exemplary fingerprint in accordance with the present invention. As illustrated in Figure 6, the fingerprint includes bulk file characteristics and meta-data 610, function coordinates 620, and unique spectra 630. The function coordinates 620 includes, for each function, the calculated out-degree, number of blocks, and number of edges. The unique spectra includes, for each function, the calculated block size, in-degree, and out-degree.

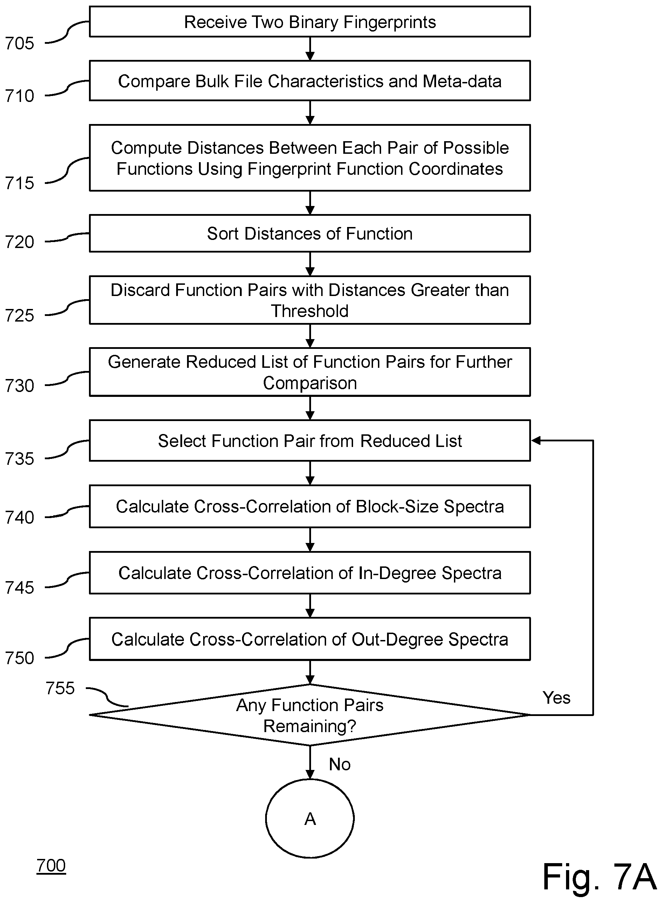

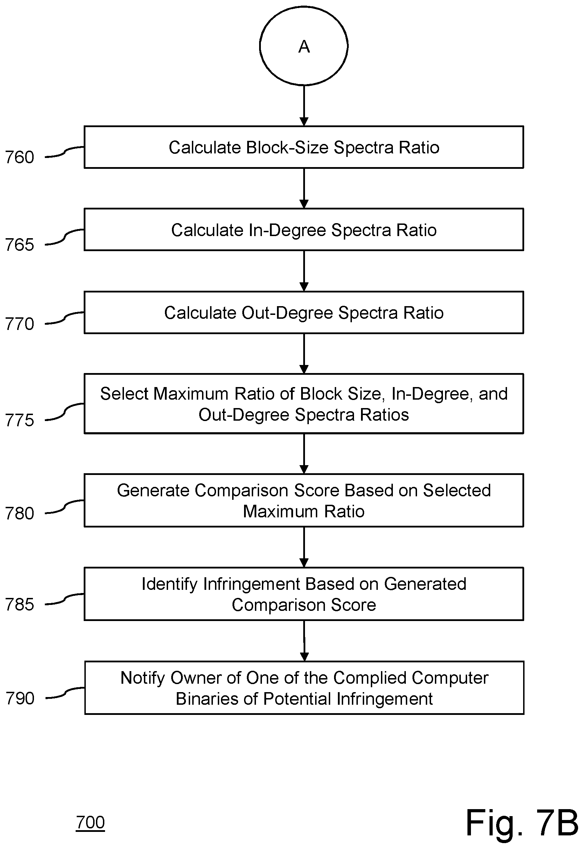

These fingerprints are then used for comparison against fingerprints of other compiled computer binaries as described below in connection with Figures 7A and 7B.

Figures 7A and 7B are flow diagrams of an exemplary process for matching fingerprints in accordance with the present invention. This process is performed using the system of Figure 2. Initially, processor 205 receives two fingerprints of compiled computer binaries via input 215 and/or memory 210 (step 705) and compares their bulk file characteristic and meta-data (step 710). The bulk file characteristic can include measuring the Jaccard Similarity, which is a numerical score representing the amount of overlap between strings contained in both fingerprints, and is typically between 0 and 1.

Next, processor 205 computes distances between each pair of possible functions of the two fingerprints using the function coordinates 620 of the respective fingerprints (step 720). Processor 205 then sorts the distances (step 720) and discards function pairs having distances greater than a threshold distance (step 725). This step reduces the processing load because only the most-likely related functions will have distances below the threshold. Thus, the particular threshold value can be selected depending upon the available processing power of the computer and the desired run-time of the fingerprint comparison process. Furthermore, those skilled in the art will recognize that above a certain distance it is highly unlikely that functions will be related, and thus at least some thresholding should be performed to reduce unnecessary processing.

Processor 205 then generates a list using the remaining function pairs (step 730), and one of the function pairs from the reduced list is selected for further processing of the unique spectra 630 (step 735). Specifically, processor 205 calculates a cross-correlation for the block-size spectra (step 740), the in-degree spectra (step 745), and the out-degree spectra (step 750). It will be recognized that the cross-correlation is a measure of how closely the spectra of the two fingerprints are related. Next processor 205 determines whether any function pairs remain to be processed (step 755). If so ("Yes path out of decision step 755), then the next function pair is selected from the reduced list (step 735) and the cross-correlation of the unique spectra are calculated (steps 740-750). The cross-correlation can produce a correlation coefficient indicating the degree of similarity or correlation. For example, a coefficient of -1 indicates complete anti-correlation and 1 indicates complete correlation (i.e., the two fingerprints have the same control flow graph).

If there are no remaining function pairs to process ("No" path out of decision step 755), then processor 205 calculates a block-size, in-degree and out-degree spectra ratios (step 760-770). These ratios are calculated by dividing a total number of respective correlation coefficients above a threshold by a total number of correlation coefficients. The threshold used for the calculation of the three ratios can be the same or different. Processor 205 then selects the maximum ratio of the unique spectra ratios (step 775) and generates a comparison score based on the selected maximum ratio (step 780). The generated comparison score is then used by processor 205 to identify infringement of one of the compiled computer binaries (step 785). The comparison score is generated by comparing the selected maximum ratio of the unique spectra ratios to a threshold, and accordingly infringement is identified when the selected maximum ratio is above the threshold. The threshold can be set, for example, by training the system using known data and a particular compiled computer binary for which it is to be determined whether there are other compiled computer binaries infringing the particular compiled computer binary. This training identifies commonalities between the known data and the particular compiled computer binary so that the threshold can be set to avoid false positives indicating infringement due to code commonly used across different pieces of software that would not be an indicator of infringement.

When, based on the generated comparison score, there is sufficient similarity between the compiled computer binaries or portions of the compiled computer binaries, processor 205 can notify the owner of one of the compiled computer binaries of the potential infringement via output 220 (step 790). The notification can include details of the regions of the allegedly infringing computer binary that is most likely involved in the infringement.

The collection of compiled computer binaries, fingerprint generation, and fingerprint matching can be automated and scheduled to execute using any type of task scheduling technique. Thus, the present invention provides a particularly cost- and time-effective way to discover, remediate, and enforce intellectual property rights, and accordingly acts as a deterrence against the theft of software code. Further, by identifying infringement based on the functions contained within compiled computer binaries, the present invention can identify an entirely copied compiled computer binary, as well as copied portions of a compiled computer binary.

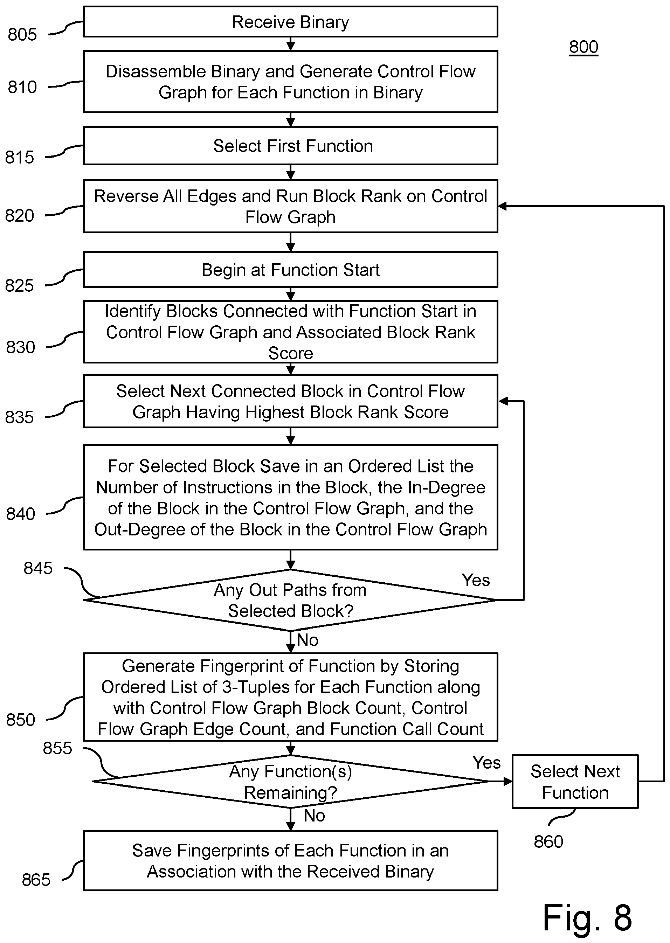

Figure 8 is a flow diagram of an exemplary fingerprinting technique 800 in accordance with another embodiment of the present invention, which is performed using the system of Figure 2. Initially, processor 205 receives a binary via input 215 and/or memory 210 (step 805) and disassembles the binary in order to generate a control flow graph for each function in the binary (step 810). Processor 205 selects a control flow graph for a first function (step 815), reverses all of the edges of the selected control flow graph and performs a block rank algorithm on the selected control flow graph in order to generate a block rank score for each block in the control flow graph of the selected function (step 820). The block rank algorithm is similar to the PageRank algorithm disclosed in the article "The PageRank Citation Ranking: Bringing Order to the Web" by L. Page et al. 1999. Those skilled in the art will recognize that the PageRank algorithm is a type of Eigenvector centrality algorithm that assigns a value corresponding to the relative importance of each block in a graph. In PageRank the blocks are web pages and the relative importance is based on the number of forward links from the page, as well as the relative importance of the web pages associated with these forward links. In the present invention the blocks within a function and the relative importance of the blocks is based on the number of incoming edges (because the edges are reversed), as well as the relative importance of the blocks from which the incoming edges originate.

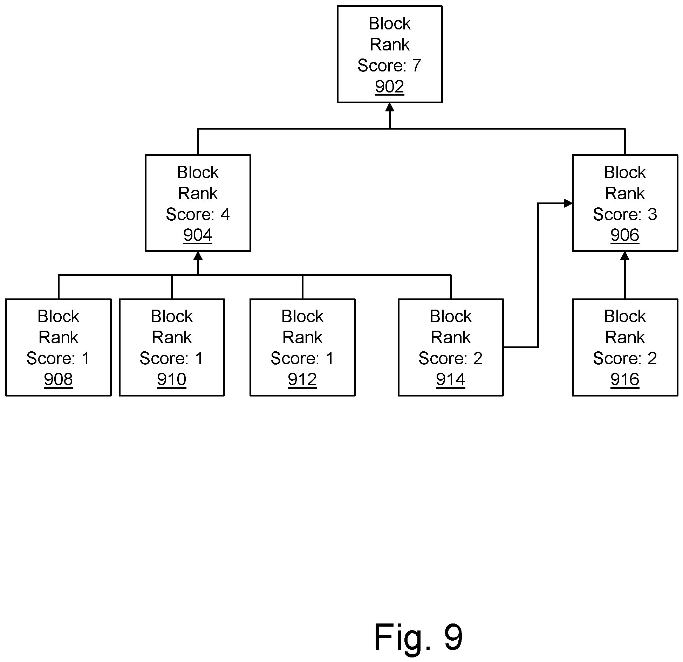

The application of block rank scoring to an exemplary, simplified function is illustrated in Figure 9, which illustrates a function with the edges reversed going from the end of the function to the start. In this exemplary function block 906 has a block rank score of 3 because block 916 has only a single forward path and therefore contributes its entire block rank score of 2 and block 914 has a block rank score of 2, which is divided between blocks 904 and 906. Block 904 has forward links from blocks 908, 910, and 912, each of which have only a single forward path and each having a block rank score of 1, and a forward link from block 914, which splits its block rank score between blocks 904 and 906. Thus, block 904 is assigned a value of 4. Finally, block 902 is assigned a block rank score of 7 because blocks 904 and 906 only have a single forward path, and therefore contribute their entire respective block rank scores of 4 and 3.

Once a relative importance value is assigned to each block within the control flow graph for the first function, a path is constructed starting from the function start based on the block rank score. Specifically, processor 205 begins path construction at the function start (step 825) and identifies the blocks connected to the function start in the control flow graph and the block rank score for each connected block (step 830). Processor 205 then constructs the path to a next block by selecting the one of the identified blocks having a highest block rank score (step 835). When there is more than one of the identified blocks having the same highest block rank score then the block with the larger number of instructions is selected as the next block. If there is still a tie, an arbitrary block is chosen among the blocks having the same highest block rank score.

For each selected block in the path processor 205 saves a 3-tuple in memory 210 as an ordered list based on the order of the blocks in the path (step 840). The 3-tuple comprises the number of instructions in the block, the in-degree of the block, and the out-degree of the block. Next processor 205 determines whether there are any out paths from the selected block (step 845). When processor determines there are out paths ("Yes" path out of decision step 845) then processor 205 uses the block rank score to select a next connected block (step 835).

The path construction continues until a block is reached that does not have any out paths ("No" path out of decision step 845). Once the end block is reached processor 205 generates the fingerprint of the selected function by storing the ordered list of 3-tuples in memory 210 along with the control flow graph block count, the control flow graph edge count, and the function call count (step 850). Each element of the ordered list corresponds to each block along the chosen characteristic path (or the Markov chain referred to above).

Returning to the exemplary function of Figure 9, the path would be constructed from block 902 to block 904 because block 904 has a higher block rank value than block 906. The path would then continue from block 904 to block 914 because block 914 has the highest block rank value of any of the outgoing paths from block 904. Thus, it should be appreciated that the ordered list does not include all blocks of the function, only those along the path. Accordingly, this reduces the amount of information required to generate a fingerprint, and in turn improves the overall functioning of a computer executing this method because the overall processing power is reduced.

Returning to Figure 8, next processor 205 determines whether there are any remaining functions in the binary that have not yet been processed (step 855). If processor 205 determines there are any remaining functions ("Yes" path out of decision step 855), processor 205 selects a next function (step 860) and the function is processed in the same manner as the first selected function (steps 820-850). When processor 205 has processed all functions of the binary ("No" path out of decision step 855) the fingerprints of each of the functions are saved in memory 210 along with an association with the received binary from which the functions originated (step 865).

Although Figure 8 involves fingerprinting functions of a single set of code it should be recognized that this can be performed on additional sets of code so that the fingerprint database is populated with functions from more than one set of code. For example, a software developer could fingerprint all of its code so that the database can later be used to identify copied functions from third-party code. Similarly, an entity can offer a service in which code from one or more software developers is collected, for example, by a web spider as described above, is stored in the database and a software developer can bring its code to the entity to determine whether the database includes any code containing copied functions.

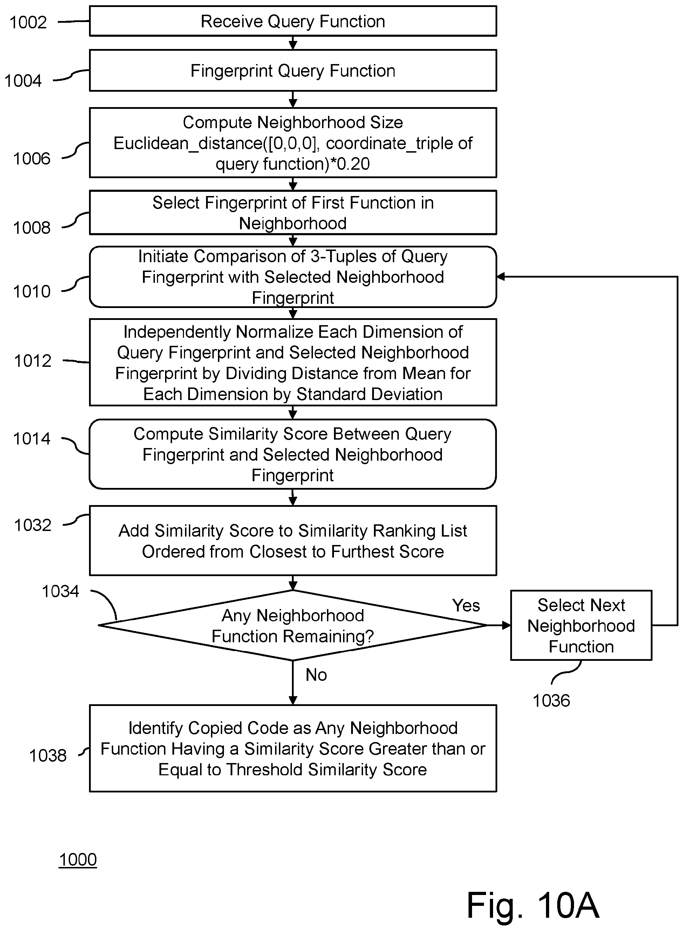

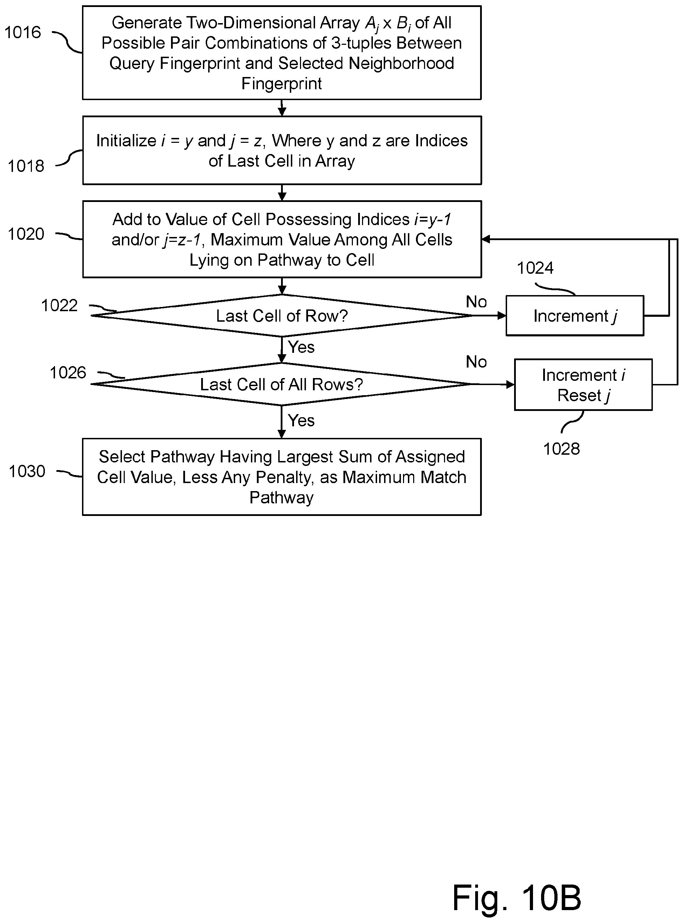

Figures 10A and 10B are a flow diagrams of an exemplary process 1000 for matching fingerprints in accordance with another embodiment of the present invention, which is performed using the system of Figure 2. Because the database of fingerprinted functions is generated using disassembled complied binaries the fingerprinted functions may contain one or more blocks that are added by the complier during compilation of the source code. Accordingly, a function may have been copied from another function even though two functions are not identical, i.e., there may not be an exact correspondence between the blocks and/or paths of one function and those of another function. These types of discrepancies are addressed in the method of Figures 10A and 10B, and thus the fingerprint matching of the present invention can identify functions containing copied code even when the functions are not identical.

Accordingly, when one desires to determine whether a function has been copied, processor 205 receives the function as a query function (step 1002) and fingerprints it (step 1004) using the method detailed above in connection with Figure 8. Next processor 205 determines a neighborhood size for identifying potentially copied functions (step 1006) using the following formula:

$$\text{Neighborhood\_Size} =$$

$$\text{Eclidean\_distance}([0,0,0], \text{coordinate\_triple\_of\_query\_function})*0.20.$$

where coordinate_triple_of_query_function comprises the (1) control flow graph block count, (2) control flow graph edge count, and (3) function call count of the query function.

The value 0.20 is a weighting factor controlling the size of the neighborhood, which in this instance is a 20% weighting factor. It should be recognized that other weighting factors could be employed, as well as no weighting factor, depending upon the query function. The weighting factor adjustment depends on the density of the distribution of the measurements of the function features, specifically, how many other functions within the call graph have similar feature metrics necessitating an expansion or contraction of the definition of a function's neighborhood.

Now that the search neighborhood has been defined, processor 205 can search a database of fingerprints, which can be stored in memory 210, to identify those within the search neighborhood and then select the fingerprint of a first function in the neighborhood (step 1008). Processor then initiates a comparison of the selected neighborhood fingerprint corresponding 3-tuple to the 3-tuple of the fingerprint of the query function (step 1010). Processor 205 begins the comparison by independently normalizing each dimension of the query fingerprint and the selected neighborhood fingerprint by dividing the distance from the mean for each dimension of all fingerprints in the neighborhood by the standard deviation for each dimension of all fingerprints in the neighborhood (step 1012).

Processor 205 calculates a similarity score between the query fingerprint and the selected neighborhood fingerprint using the Needleman-Wunsch algorithm (step 1014), which is described in the article "A general method applicable to the search for similarities in the amino acid sequence of two proteins" S. Needleman et al., Journal of Molecular Biology 48 (3): 443-53. doi:10.1016/0022-2836(70)90057-4. PMID 5420325.

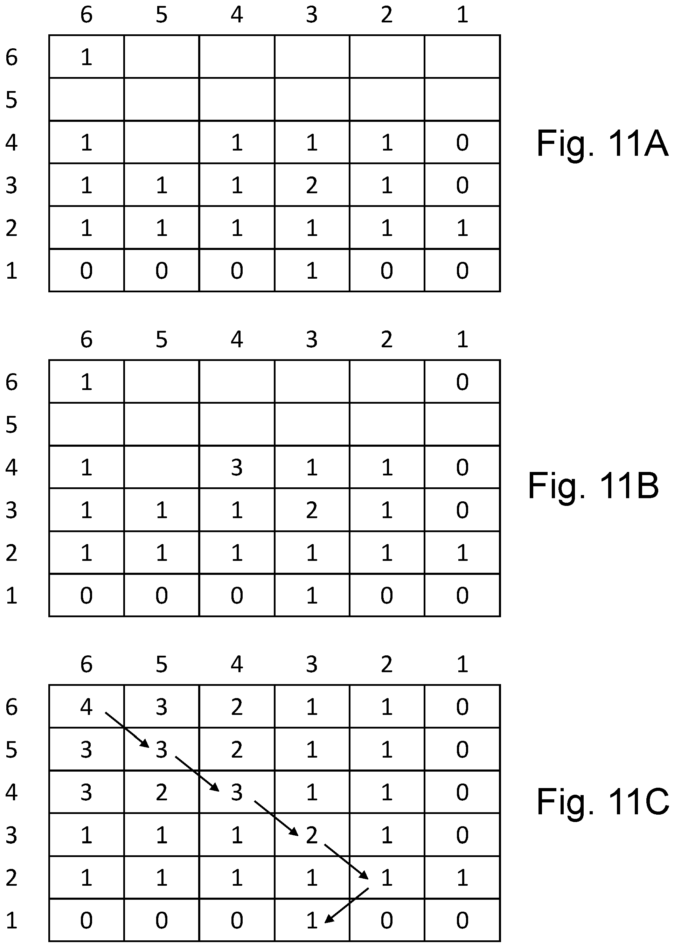

The details of the application of the Needleman-Wunsch algorithm in the present invention are illustrated in Figure 10B, which will be described in connection with Figures 11A-11C. First, processor 205 generates a two-dimensional array $A_j$ x $Bi$ of all possible pair combinations of 3-tuples between the query fingerprint and the selected neighborhood fingerprint (step 1016), where, starting from the beginning of the ordered list of 3-tuples, $A_j$ represents $j$th block in the ordered list for the selected neighborhood function the and $B_i$ represents the ith block in the ordered list for the query function. The assignment of the neighborhood function to $A_j$ and the query function to $B_i$ is not critical and the assignments can be reversed. Each cell of the array is assigned a value of "1" if there is a match between the 3-tuples for the query fingerprint and the selected neighborhood fingerprint and a "0" if there is no match. The array allows a representation of every possible comparison between the blocks of the two fingerprints by generating pathways through the array and the pathway having the sum of assigned cell values that is the largest is selected as the similarity score.

Next, processor 205 initializes the indices $i$ and $j$ to correspond to the last cell in the array (step 1018), which in this example is setting $i=y$ and $j=z$. Processor 205 then performs a successive summation procedure according to steps 1020-1028, in a row-by-row manner starting from the right side of each row. Specifically, for a cell under evaluation at $i=y$ and $j=z$, processor 205 adds its value to the maximum value of the cells having indices $i=y-1$ and/or $j=z-1$ (step 1020). For example, referring now to Figures 11A and 11B, assume that the highlighted cell at indices 4, 4 is under evaluation and that it was already assigned a value of 1 due to a match between 3-tuples of the query fingerprint and the selected neighborhood fingerprint. In Figure 11A the cells in row 4 to the right of the cell at indices 4, 4 have already been subject to the successive summation, as well as all of the cells in rows 1-3. The cells having an index of 3 (i.e., 4-1) are evaluated to identify the maximum value, which in this example would be the value of 2 in the cell at 3, 3. Accordingly, as illustrated in Figure 11B, the value of 2 is added to the value of 1 already at cell 4, 4, and thus the successive summation results in a value of 3 at index 4,4.

Returning to Figure 10B, after adding the value to a cell, processor 205 determines whether the evaluated cell is the last cell in a row (step 1022). If not ("No" path out of decision step 1022), processor 205 increments the column index by one (step 1024) and the next cell in the row is subjected to the successive summation (step 1020). If processor 205 determines that the evaluated cell is the last cell of the row ("Yes" path out of decision step 1022), then processor 205 determines whether the evaluated cell is the last cell of all of the rows (step 1026). If processor 205 determines there are remaining rows ("No" path of decision step 1026), then processor 205 increments the row index by one and resets the column index to the most right-hand column index (step 1028) and processor 205 continues the successive summation in the first column of the next row (step 1020). The result of the successive summation across all cells is illustrated in Figure 11C.

If processor 205 determines that all cells have been evaluated ("Yes" path out of decision step 1026), then processor 205 selects, based on the Manhattan distance between each of the 3-tuples, a pathway having the largest sum of the assigned cell values, less any gap penalty, as the maximum match pathway (step 1030). In an exemplary embodiment the gap penalty is 3. However, it will be recognized that other gap penalties can be used. The value in each cell in the outer row or outer column contains a value of the maximum number of matches that can be obtained by starting a pathway at that cell, and the cell in the outer row and column are evaluated identify the cell having the largest value, which is where the maximum match pathway begins. The maximum match pathway then continues from this outer cell to the cell in each successive row or column having a largest value. Referring again to Figure 11C, the largest number in the outer row or column is at index 6, 6, which has a value of 4. From index 6, 6 the pathway continues to the cell having the maximum value in each row of each successive column, which is illustrated by the arrows in the figure.

Returning to Figure 10A, once processor 205 identifies the maximum match pathway (step 1030), then processor 205 uses the sum of all of the cells along the pathway as the similarity score, which is added to a similarity score ranking list, which is ordered by score from closest to further (step 1034). If processor 205 determines there are functions in the neighborhood that have not yet been compared ("Yes" path out of decision step 1034), then processor 205 selects the next neighborhood function (step 1036) and subjects it to the comparison (step 1010). If processor 205 determines that all neighborhood functions have been subject to the comparison ("No" path out of decision step 1034), then processor 205 identifies any function having a similarity score greater than or equal to a threshold similarity score as being a function having code copied by the query function (step 1038). The threshold can be set, for example, by training the system using known data and a particular compiled computer binary for which it is to be determined whether there are other compiled computer binaries infringing the particular compiled computer binary. This training identifies commonalities between the known data and the particular compiled computer binary so that the threshold can be set to avoid false positives indicating infringement due to code commonly used across different pieces of software that would not be an indicator of infringement.

Although Figures 10A and 10B involve a comparison between the query function and a plurality of functions stored in a database of fingerprints, the comparison technique can also be employed to compare two functions to identify whether one contains copied code of the other. In this case the selection of the neighborhood size (step 1006) could be eliminated along with the iteration through the functions in the neighborhood (the return path from step 1036 to 1010). Alternatively, the neighborhood size (step 1006) could be maintained as an initial threshold to quickly eliminate the possibility of copying when one of the fingerprints is outside of the neighborhood. In this case the iteration through functions in the neighborhood would still be eliminated because the comparison involves only two functions.

The fingerprint generation and matching techniques of the present invention advantageously improve the operation of the computer performing these techniques by reducing the processing load required to fingerprint code and compare fingerprints.

Although exemplary embodiments have been described above as generating fingerprints using compiled computer binaries, the present invention is equally applicable to computer source code, byte code, and the like.

The foregoing disclosure has been set forth merely to illustrate the invention and is not intended to be limiting. Since modifications of the disclosed embodiments incorporating the substance of the invention may occur to persons skilled in the art, the invention should be construed to include everything within the scope of the appended claims.

**Claims**

1. A method comprising:

   receiving (805), by a computer (200), a first compiled computer binary;
   generating, by the computer, a first fingerprint of a first function of the first compiled computer binary by

      generating (820) a block rank score for each block in the first function;
      generating (825-845) a path of blocks of the first function based on the block rank score of each block;
      generating (850) the first fingerprint using the generated path of blocks of the first function;

   receiving (805), by the computer (200), a second compiled computer binary;
   generating, by the computer (200), a second fingerprint of a second function of the second compiled computer binary by

      generating (820) a block rank score for each block in the second function;
      generating (825-845) a path of blocks of the second function based on the block rank score of each block;
      generating (850) the second fingerprint using the generated path of blocks of the second function;

   comparing (1006-1034), by the computer (200), the first fingerprint of the first function with the second fingerprint of the second function; and

determining (1038), by the computer (200), whether the second function includes at least some of code from the first function based on the comparison, wherein the generation of a block rank score for each block in the first and second functions involves reversing all edges in a control flow graph for the first and second functions and assigning a block rank score to each block based on block rank scores of blocks having a forward path to the each block.

2. The method of claim 1, wherein the generation of the path of blocks for the first and second functions comprises:

starting from a first block in the first and second functions;
selecting a next block in the path based on the block rank score of possible next blocks; and
storing, for each block in an ordered list based on a position within the path, a 3-tuple comprising a number of instructions in the block, an in-degree of the block, and an out-degree of the block.

3. The method of claim 2, wherein the path of blocks of the first function includes less than all blocks of the first function and the ordered list for the first function only includes 3-tuples for blocks in the path of blocks for the first function.

4. The method of claim 1, wherein the first and second complied computer binaries are complied using different compilers, one of the different compilers adds at least one block to the first or second function that is not present in the other of the first and second functions, and a match is determined between the first and second functions even though the added at least one block is not present in both the first and second functions.

5. The method of claim 1, wherein the comparison of the first and second fingerprints involves comparing 3-tuples in a first ordered list for the first function with 3-tuples in a second ordered list for the second function, wherein the 3-tuples in the first and second ordered lists comprise a number of instructions in the block, an in-degree of the block, and an out-degree of the block.

6. The method of claim 5, wherein the comparison of the 3-tuples in the first and second ordered lists comprises:

generating a two-dimensional array of all possible pair combinations between the 3-tuples in the first and second ordered lists;
generating a maximum match pathway through the two-dimensional array.

7. The method of claim 1, wherein a plurality of functions are generated from a plurality of received complied computer binaries, and each of the plurality of functions is fingerprinted and compared to one of the first and second fingerprints to determine whether each of the plurality of functions matches the one of the first and second fingerprints.

8. A system comprising:

a memory (210) storing computer code; and
a processor (205) coupled to the memory (210), wherein execution of the computer code by the processor (205), causes the processor to

receive (805) a first compiled computer binary;
generate a first fingerprint of a first function of the first compiled computer binary by

generating (820) a block rank score for each block in the first function;
generating (825-845) a path of blocks of the first function based on the block rank score of each block;
generating (850) the first fingerprint using the generated path of blocks of the first function;

receive (805) a second compiled computer binary;
generate a second fingerprint of a second function of the second compiled computer binary by

generating (820) a block rank score for each block in the second function;
generating (825-845) a path of blocks of the second function based on the block rank score of each block;
generating (850) the second fingerprint using the generated path of blocks of the second function;

compare (1006-1034) the first fingerprint of the first function with the second fingerprint of the second function; and

determine (1038) whether the second function includes at least some of code from the first function based on the comparison, wherein the generation of a block rank score for each block in the first and second functions involves reversing all edges in a control flow graph for the first and second functions and assigning a block rank score to each block based on block rank scores of blocks having a forward path to the each block.

9. The system of claim 8, wherein execution of the computer code causes the processor to generate the path of blocks for the first and second functions by:

starting from a first block in the first and second functions;
selecting a next block in the path based on the block rank score of possible next blocks; and
storing, for each block in an ordered list based on a position within the path, a 3-tuple comprising a number of instructions in the block, an in-degree of the block, and an out-degree of the block.

10. The system of claim 9, wherein the path of blocks of the first function includes less than all blocks of the first function and the ordered list for the first function only includes 3-tuples for blocks in the path of blocks for the first function.

11. The system of claim 8, wherein the first and second complied computer binaries are complied using different compilers, one of the different compilers adds at least one block to the first or second function that is not present in the other of the first and second functions, and a match is determined between the first and second functions even though the added at least one block is not present in both the first and second functions.

12. The system of claim 8, wherein the comparison of the first and second fingerprints involves comparing 3-tuples in a first ordered list for the first function with 3-tuples in a second ordered list for the second function, wherein the 3-tuples in the first and second ordered lists comprise a number of instructions in the block, an in-degree of the block, and an out-degree of the block.

13. The system of claim 12, wherein the comparison of the 3-tuples in the first and second ordered lists comprises:

generating a two-dimensional array of all possible pair combinations between the 3-tuples in the first and second ordered lists;
generating a maximum match pathway through the two-dimensional array.

14. The system of claim 8, wherein a plurality of functions are generated from a plurality of received complied computer binaries, and each of the plurality of functions is fingerprinted and compared to one of the first and second fingerprints to determine whether each of the plurality of functions matches the one of the first and second fingerprints.

**Patentansprüche**

1. Verfahren, umfassend:

Empfangen (805), durch einen Computer (200), einer ersten kompilierten Computer-Binärdatei;
Erzeugen, durch den Computer, eines ersten Fingerabdrucks einer ersten Funktion der ersten kompilierten Computer-Binärdatei durch Erzeugen (820) eines Blockrangwerts für jeden Block in der ersten Funktion;
Erzeugen (825-845) eines Pfades von Blöcken der ersten Funktion basierend auf dem Blockrangwert jedes Blocks;
Erzeugen (850) des ersten Fingerabdrucks unter Verwendung des erzeugten Pfades von Blöcken der ersten Funktion;
Empfangen (805), durch den Computer (200), einer zweiten kompilierten Computer-Binärdatei;
Erzeugen, durch den Computer (200), eines zweiten Fingerabdrucks einer zweiten Funktion der zweiten kompilierten Computer-Binärdatei durch Erzeugen (820) eines Blockrangwerts für jeden Block in der zweiten Funktion;
Erzeugen (825-845) eines Pfades von Blöcken der zweiten Funktion basierend auf dem Blockrangwert jedes Blocks;
Erzeugen (850) des zweiten Fingerabdrucks unter Verwendung des erzeugten Pfades von Blöcken der zweiten Funktion;
Vergleichen (1006-1034), durch den Computer (200), des ersten Fingerabdrucks der ersten Funktion mit dem zweiten Fingerabdruck der zweiten Funktion; und

Bestimmen (1038), durch den Computer (200), ob die zweite Funktion mindestens einen Teil des Codes von der ersten Funktion beinhaltet, basierend auf dem Vergleich, wobei die Erzeugung eines Blockrangwerts für jeden Block in der ersten und der zweiten Funktion das Umkehren aller Kanten in einem Steuerflussdiagramm für die erste und die zweite Funktion und das Zuweisen eines Blockrangwerts zu jedem Block basierend auf Blockrangwerten von Blöcken mit einem Vorwärtspfad zu dem jeden Block involviert.

2. Verfahren nach Anspruch 1, wobei die Erzeugung des Pfades von Blöcken für die erste und die zweite Funktion Folgendes umfasst:

Beginnen bei einem ersten Block in der ersten und der zweiten Funktion;
Auswählen eines nächsten Blocks auf dem Pfad basierend auf dem Blockrangwert von möglichen nächsten Blöcken; und
Speichern, für jeden Block in einer sortierten Liste basierend auf einer Position auf dem Pfad, eines 3-Tupel, das eine Reihe von Anweisungen in dem Block, einen Eingangsgrad des Blocks und einen Ausgangsgrad des Blocks umfasst.

3. Verfahren nach Anspruch 2, wobei der Pfad von Blöcken der ersten Funktion weniger als alle Blöcke der ersten Funktion beinhaltet und die sortierte Liste für die erste Funktion nur 3-Tupels für Blöcke auf dem Pfad von Blöcken für die erste Funktion beinhaltet.

4. Verfahren nach Anspruch 1, wobei die erste und die zweite kompilierte Computer-Binärdatei unter Verwendung unterschiedlicher Compiler kompiliert werden, wobei einer der unterschiedlichen Compiler mindestens einen Block zu der ersten oder der zweiten Funktion hinzufügt, der in der anderen der ersten und zweiten Funktion nicht vorhanden ist, und eine Übereinstimmung zwischen der ersten und der zweiten Funktion bestimmt wird, auch wenn der hinzugefügte mindestens eine Block weder in der ersten noch in der zweiten Funktion vorhanden ist.

5. Verfahren nach Anspruch 1, wobei der Vergleich des ersten und des zweiten Fingerabdrucks das Vergleichen von 3-Tupels in einer ersten sortierten Liste für die erste Funktion mit 3-Tupels in einer zweiten sortierten Liste für die zweite Funktion involviert, wobei die 3-Tupels in der ersten und der zweiten sortierten Liste eine Anzahl an Anweisungen in dem Block, einen Eingangsgrad des Blocks und einen Ausgangsgrad des Blocks umfassen.

6. Verfahren nach Anspruch 5, wobei der Vergleich der 3-Tupels in der ersten und der zweiten sortierten Liste Folgendes umfasst:

Erzeugen eines zweidimensionalen Arrays aller möglichen Paarkombinationen zwischen den 3-Tupels in der ersten und der zweiten sortierten Liste;
Erzeugen eines maximalen Übereinstimmungspfades durch das zweidimensionale Array.

7. Verfahren nach Anspruch 1, wobei eine Vielzahl von Funktionen aus einer Vielzahl von empfangenen kompilierten Computer-Binärdateien erzeugt wird und jede der Vielzahl von Funktionen mit einem Fingerabdruck versehen und mit einem von dem ersten und dem zweiten Fingerabdruck verglichen wird, um zu bestimmen, ob jede der Vielzahl von Funktionen mit dem einen von dem ersten und dem zweiten Fingerabdruck übereinstimmt.

8. System, umfassend:

einen Speicher (210), auf dem Computercode gespeichert ist; und
einen Prozessor (205), der an den Speicher (210) gekoppelt ist, wobei die Ausführung des Computercodes durch den Prozessor (205) den Prozessor zu Folgendem veranlasst:

Empfangen (805) einer ersten kompilierten Computer-Binärdatei;
Erzeugen eines ersten Fingerabdrucks einer ersten Funktion der ersten kompilierten Computer-Binärdatei durch
Erzeugen (820) eines Blockrangwerts für jeden Block in der ersten Funktion;
Erzeugen (825-845) eines Pfades von Blöcken der ersten Funktion basierend auf dem Blockrangwert jedes Blocks;
Erzeugen (850) des ersten Fingerabdrucks unter Verwendung des erzeugten Pfades von Blöcken der ersten Funktion;

Empfangen (805) einer zweiten kompilierten Computer-Binärdatei;

Erzeugen eines zweiten Fingerabdrucks einer zweiten Funktion der zweiten kompilierten Computer-Binärdatei durch

Erzeugen (820) eines Blockrangwerts für jeden Block in der zweiten Funktion;

Erzeugen (825-845) eines Pfades von Blöcken der zweiten Funktion basierend auf dem Blockrangwert jedes Blocks;

Erzeugen (850) des zweiten Fingerabdrucks unter Verwendung des erzeugten Pfades von Blöcken der zweiten Funktion;

Vergleichen (1006-1034) des ersten Fingerabdrucks der ersten Funktion mit dem zweiten Fingerabdruck der zweiten Funktion; und

Bestimmen (1038), ob die zweite Funktion mindestens einen Teil des Codes von der ersten Funktion beinhaltet, basierend auf dem Vergleich, wobei die Erzeugung eines Blockrangwerts für jeden Block in der ersten und der zweiten Funktion das Umkehren aller Kanten in einem Steuerflussdiagramm für die erste und die zweite Funktion und das Zuweisen eines Blockrangwerts zu jedem Block basierend auf Blockrangwerten von Blöcken mit einem Vorwärtspfad zu dem jeden Block involviert.

9. System nach Anspruch 8, wobei die Ausführung des Computercodes den Prozessor dazu veranlasst, den Pfad von Blöcken für die erste und die zweite Funktion durch Folgendes zu erzeugen:

Beginnen bei einem ersten Block in der ersten und der zweiten Funktion;

Auswählen eines nächsten Blocks auf dem Pfad basierend auf dem Blockrangwert von möglichen nächsten Blöcken; und

Speichern, für jeden Block in einer sortierten Liste basierend auf einer Position auf dem Pfad, eines 3-Tupel, das eine Reihe von Anweisungen in dem Block, einen Eingangsgrad des Blocks und einen Ausgangsgrad des Blocks umfasst.

10. System nach Anspruch 9, wobei der Pfad von Blöcken der ersten Funktion weniger als alle Blöcke der ersten Funktion beinhaltet und die sortierte Liste für die erste Funktion nur 3-Tupel für Blöcke auf dem Pfad von Blöcken für die erste Funktion beinhaltet.

11. System nach Anspruch 8, wobei die erste und die zweite kompilierte Computer-Binärdatei unter Verwendung unterschiedlicher Compiler kompiliert werden, wobei einer der unterschiedlichen Compiler mindestens einen Block zu der ersten oder der zweiten Funktion hinzufügt, der in der anderen der ersten und zweiten Funktion nicht vorhanden ist, und eine Übereinstimmung zwischen der ersten und der zweiten Funktion bestimmt wird, auch wenn der hinzugefügte mindestens eine Block weder in der ersten noch in der zweiten Funktion vorhanden ist.

12. System nach Anspruch 8, wobei der Vergleich des ersten und des zweiten Fingerabdrucks das Vergleichen von 3-Tupels in einer ersten sortierten Liste für die erste Funktion mit 3-Tupels in einer zweiten sortierten Liste für die zweite Funktion involviert, wobei die 3-Tupels in der ersten und der zweiten sortierten Liste eine Reihe von Anweisungen im Block, einen Eingangsgrad des Blocks und einen Ausgangsgrad des Blocks umfassen.

13. System nach Anspruch 12, wobei der Vergleich der 3-Tupels in der ersten und der zweiten sortierten Liste Folgendes umfasst:

Erzeugen eines zweidimensionalen Arrays aller möglichen Paarkombinationen zwischen den 3-Tupels in der ersten und der zweiten sortierten Liste;

Erzeugen eines maximalen Übereinstimmungspfades durch das zweidimensionale Array.

14. System nach Anspruch 8, wobei eine Vielzahl von Funktionen aus einer Vielzahl von empfangenen kompilierten Computer-Binärdateien erzeugt wird und jede der Vielzahl von Funktionen mit einem Fingerabdruck versehen und mit einem von dem ersten und dem zweiten Fingerabdruck verglichen wird, um zu bestimmen, ob jede der Vielzahl von Funktionen mit einem von dem ersten und dem zweiten Fingerabdruck übereinstimmt.

**Revendications**

1. Procédé comprenant :

la réception (805), par un ordinateur (200), d'un premier binaire d'ordinateur compilé ;

la génération, par l'ordinateur, d'une première empreinte numérique d'une première fonction du premier binaire d'ordinateur compilé par la génération (820) d'un résultat de rang de bloc pour chaque bloc dans la première fonction ;

la génération (825 à 845) d'un trajet de blocs de la première fonction d'après le résultat de rang de bloc de chaque bloc ;

la génération (850) de la première empreinte numérique à l'aide du trajet de blocs généré de la première fonction ;

la réception (805), par l'ordinateur (200), d'un second binaire d'ordinateur compilé ;

la génération, par l'ordinateur (200), d'une seconde empreinte numérique d'une seconde fonction du second binaire d'ordinateur compilé par la génération (820) d'un résultat de rang de bloc pour chaque bloc dans la seconde fonction ;

la génération (825 à 845) d'un trajet de blocs de la seconde fonction d'après le résultat de rang de bloc de chaque bloc ;

la génération (850) de la seconde empreinte numérique à l'aide du trajet de blocs généré de la seconde fonction ;

la comparaison (1006 à 1034), par l'ordinateur (200), de la première empreinte numérique de la première fonction à la seconde empreinte numérique de la seconde fonction ; et

la détermination (1038), par l'ordinateur (200), permettant de savoir si la seconde fonction comporte au moins une partie de code de la première fonction d'après la comparaison, dans lequel la génération d'un résultat de rang de bloc pour chaque bloc dans les première et seconde fonctions implique l'inversion de tous les contours dans un graphique de flux de commande pour les première et seconde fonctions et l'attribution d'un résultat de rang de bloc à chaque bloc d'après des résultats de rang de bloc de blocs ayant un trajet vers l'avant vers chaque bloc.

2. Procédé selon la revendication 1, dans lequel la génération du trajet de blocs pour les première et seconde fonctions comprend :

le démarrage à partir d'un premier bloc dans les première et seconde fonctions ;

la sélection d'un bloc suivant dans le trajet d'après le résultat de rang de bloc de blocs suivants possibles ; et

le stockage, pour chaque bloc dans une liste ordonnée d'après une position au sein du trajet, d'un 3-uplet comprenant un nombre d'instructions dans le bloc, un degré intrant du bloc, et un degré sortant du bloc.

3. Procédé selon la revendication 2, dans lequel le trajet de blocs de la première fonction comporte moins de tous les blocs de la première fonction et la liste ordonnée pour la première fonction comporte uniquement des 3-uplets pour des blocs dans le trajet de blocs pour la première fonction.

4. Procédé selon la revendication 1, dans lequel les premier et second binaires d'ordinateur compilés sont compilés à l'aide de compilateurs différents, l'un des compilateurs différents additionne au moins un bloc à la première ou seconde fonction qui n'est pas présent dans l'autre des première et seconde fonctions, et une concordance est déterminée entre les première et seconde fonctions même si l'au moins un bloc additionné n'est pas présent à la fois dans les première et seconde fonctions.

5. Procédé selon la revendication 1, dans lequel la comparaison des première et seconde empreintes numériques implique la comparaison de 3-uplets dans une première liste ordonnée pour la première fonction à des 3-uplets dans une seconde liste ordonnée pour la seconde fonction, dans lequel les 3-uplets dans les première et seconde listes ordonnées comprennent un nombre d'instructions dans le bloc, un degré intrant du bloc, et un degré sortant du bloc.

6. Procédé selon la revendication 5, dans lequel la comparaison des 3-uplets dans les première et seconde listes ordonnées comprend :

la génération d'une matrice bidimensionnelle de toutes les combinaisons de paires possibles entre les 3-uplets dans les première et seconde listes ordonnées ;

la génération d'un chemin d'accès de concordance maximale par le biais de la matrice bidimensionnelle.

7. Procédé selon la revendication 1, dans lequel une pluralité de fonctions sont générées à partir d'une pluralité de binaires d'ordinateur compilés reçus, et chacune de la pluralité de fonctions est dotée d'une empreinte numérique et comparée à l'une des première et seconde empreintes numériques pour déterminer si chacune de la pluralité de fonctions concorde avec l'une des première et seconde empreintes numériques.

8. Système comprenant :

une mémoire (210) stockant un code d'ordinateur ; et
un processeur (205) couplé à la mémoire (210), dans lequel une exécution du code d'ordinateur par le processeur (205), amène le processeur à recevoir (805) un premier binaire d'ordinateur compilé ;
générer une première empreinte numérique d'une première fonction du premier binaire d'ordinateur compilé par la génération (820) d'un résultat de rang de bloc pour chaque bloc dans la première fonction ;
la génération (825 à 845) d'un trajet de blocs de la première fonction d'après le résultat de rang de bloc de chaque bloc ;
la génération (850) de la première empreinte numérique à l'aide du trajet de blocs généré de la première fonction ;
recevoir (805) un second binaire d'ordinateur compilé ;
générer une seconde empreinte numérique d'une seconde fonction du second binaire d'ordinateur compilé par la génération (820) d'un résultat de rang de bloc pour chaque bloc dans la seconde fonction ;
la génération (825 à 845) d'un trajet de blocs de la seconde fonction d'après le résultat de rang de bloc de chaque bloc ;
la génération (850) de la seconde empreinte numérique à l'aide du trajet de blocs généré de la seconde fonction ;
comparer (1006 à 1034) la première empreinte numérique de la première fonction à la seconde empreinte numérique de la seconde fonction ; et
déterminer (1038) si la seconde fonction comporte au moins une partie de code de la première fonction d'après la comparaison, dans lequel la génération d'un résultat de rang de bloc pour chaque bloc dans les première et seconde fonctions implique l'inversion de tous les contours dans un graphique de flux de commande pour les première et seconde fonctions et l'attribution d'un résultat de rang de bloc à chaque bloc d'après des résultats de rang de bloc de blocs ayant un trajet vers l'avant vers chaque bloc.

9. Système selon la revendication 8, dans lequel l'exécution du code d'ordinateur amène le processeur à générer le trajet de blocs pour les première et seconde fonctions par :

le démarrage à partir d'un premier bloc dans les première et seconde fonctions ;
la sélection d'un bloc suivant dans le trajet d'après le résultat de rang de bloc de blocs suivants possibles ; et
le stockage, pour chaque bloc dans une liste ordonnée d'après une position au sein du trajet, d'un 3-uplet comprenant un nombre d'instructions dans le bloc, un degré intrant du bloc, et un degré sortant du bloc.

10. Système selon la revendication 9, dans lequel le trajet de blocs de la première fonction comporte moins de tous les blocs de la première fonction et la liste ordonnée pour la première fonction comporte uniquement des 3-uplets pour des blocs dans le trajet de blocs pour la première fonction.

11. Système selon la revendication 8, dans lequel les premier et second binaires d'ordinateur compilés sont compilés à l'aide de compilateurs différents, l'un des compilateurs différents additionne au moins un bloc à la première ou seconde fonction qui n'est pas présent dans l'autre des première et seconde fonctions, et une concordance est déterminée entre les première et seconde fonctions même si l'au moins un bloc additionné n'est pas présent à la fois dans les première et seconde fonctions.

12. Système selon la revendication 8, dans lequel la comparaison des première et seconde empreintes numériques implique la comparaison de 3-uplets dans une première liste ordonnée pour la première fonction à des 3-uplets dans une seconde liste ordonnée pour la seconde fonction, dans lequel les 3-uplets dans les première et seconde listes ordonnées comprennent un nombre d'instructions dans le bloc, un degré intrant du bloc, et un degré sortant du bloc.

13. Système selon la revendication 12, dans lequel la comparaison des 3-uplets dans les première et seconde listes ordonnées comprend :

la génération d'une matrice bidimensionnelle de toutes les combinaisons de paires possibles entre les 3-uplets dans les première et seconde listes ordonnées ;
la génération d'un chemin d'accès de concordance maximale par le biais de la matrice bidimensionnelle.

14. Système selon la revendication 8, dans lequel une pluralité de fonctions sont générées à partir d'une pluralité de binaires d'ordinateur compilés reçus, et chacune de la pluralité de fonctions est dotée d'une empreinte numérique et comparée à l'une des première et seconde empreintes numériques pour déterminer si chacune de la pluralité de fonctions concorde avec l'une des première et seconde empreintes numériques.

Fingerprint
Generation
(Fig. 3 or 8)

300 or 800

Fingerprint
Matching
(Figs. 7A, 7B or
10A, 10B)

700 or 1000

Fig. 1

Fig. 2

200

305 — Receive Binary

310 — Measure Bulk File Characteristics and Meta-Data

315 — Disassemble Binary and Generate Call Graph for Binary and Control Flow Graph for Each Function

320 — Select First Function

325 — Calculate Function Out-Degree Using Function Call Graph

330 — Calculate Total Number of Blocks Within Selected Function's Control Flow Graph

335 — Calculate Total Number of Edges Within Selected Function's Control Flow Graph

340 — Calculate Leading Eigenvector of Adjacency Matrix

345 — Calculate Markov Chain

350 — Calculate Count Block Size, In-Degree, and Out-Degree Along Chain

355 — Any Function Remaining?

Yes — Select Next Function — 360

No

365 — Generate Fingerprint of Binary

300

Fig. 3

Fig. 4

Fig. 5

Bulk File Characteristics and Meta-Data
610

Function Coordinates
620

fun_1: (out-deg, blks, edges)
fun_2: (out-deg, blks, edges)
fun_3: (out-deg, blks, edges)
.
.

Unique Spectra
630

fun_3:
Block Size;

fun_2:
Block Size;

fun_1:
Block Size;
In-Degree;
Out-Degree

Fig. 6

```
705  Receive Two Binary Fingerprints

710  Compare Bulk File Characteristics and Meta-data

715  Compute Distances Between Each Pair of Possible
     Functions Using Fingerprint Function Coordinates

720  Sort Distances of Function

725  Discard Function Pairs with Distances Greater than
     Threshold

730  Generate Reduced List of Function Pairs for Further
     Comparison

735  Select Function Pair from Reduced List

740  Calculate Cross-Correlation of Block-Size Spectra

745  Calculate Cross-Correlation of In-Degree Spectra

750  Calculate Cross-Correlation of Out-Degree Spectra

755  Any Function Pairs Remaining?    Yes

                No

                A
```

700

Fig. 7A

A

760 — Calculate Block-Size Spectra Ratio

765 — Calculate In-Degree Spectra Ratio

770 — Calculate Out-Degree Spectra Ratio

775 — Select Maximum Ratio of Block Size, In-Degree, and Out-Degree Spectra Ratios

780 — Generate Comparison Score Based on Selected Maximum Ratio

785 — Identify Infringement Based on Generated Comparison Score

790 — Notify Owner of One of the Complied Computer Binaries of Potential Infringement

700

Fig. 7B

805 — Receive Binary

*800*

810 — Disassemble Binary and Generate Control Flow Graph for Each Function in Binary

815 — Select First Function

820 — Reverse All Edges and Run Block Rank on Control Flow Graph

825 — Begin at Function Start

830 — Identify Blocks Connected with Function Start in Control Flow Graph and Associated Block Rank Score

835 — Select Next Connected Block in Control Flow Graph Having Highest Block Rank Score

840 — For Selected Block Save in an Ordered List the Number of Instructions in the Block, the In-Degree of the Block in the Control Flow Graph, and the Out-Degree of the Block in the Control Flow Graph

845 — Any Out Paths from Selected Block? — Yes

No

850 — Generate Fingerprint of Function by Storing Ordered List of 3-Tuples for Each Function along with Control Flow Graph Block Count, Control Flow Graph Edge Count, and Function Call Count

855 — Any Function(s) Remaining? — Yes — Select Next Function

860

No

865 — Save Fingerprints of Each Function in an Association with the Received Binary

Fig. 8

Fig. 9

1002 — Receive Query Function

1004 — Fingerprint Query Function

1006 — Compute Neighborhood Size
Euclidean_distance([0,0,0], coordinate_triple of query function)*0.20

1008 — Select Fingerprint of First Function in Neighborhood

1010 — Initiate Comparison of 3-Tuples of Query Fingerprint with Selected Neighborhood Fingerprint

1012 — Independently Normalize Each Dimension of Query Fingerprint and Selected Neighborhood Fingerprint by Dividing Distance from Mean for Each Dimension by Standard Deviation

1014 — Compute Similarity Score Between Query Fingerprint and Selected Neighborhood Fingerprint

1032 — Add Similarity Score to Similarity Ranking List Ordered from Closest to Furthest Score

1034 — Any Neighborhood Function Remaining?

Yes → Select Next Neighborhood Function — 1036

No ↓

1038 — Identify Copied Code as Any Neighborhood Function Having a Similarity Score Greater than or Equal to Threshold Similarity Score

1000

Fig. 10A

**1016** — Generate Two-Dimensional Array $A_j$ x $B_j$ of All Possible Pair Combinations of 3-tuples Between Query Fingerprint and Selected Neighborhood Fingerprint

**1018** — Initialize $i = y$ and $j = z$, Where y and z are Indices of Last Cell in Array

**1020** — Add to Value of Cell Possessing Indices $i=y-1$ and/or $j=z-1$, Maximum Value Among All Cells Lying on Pathway to Cell

**1022** — Last Cell of Row?  — No → **1024** Increment $j$

Yes

**1026** — Last Cell of All Rows?  — No → Increment $i$ Reset $j$  **1028**

Yes

**1030** — Select Pathway Having Largest Sum of Assigned Cell Value, Less Any Penalty, as Maximum Match Pathway

## Fig. 10B

|   | 6 | 5 | 4 | 3 | 2 | 1 |
|---|---|---|---|---|---|---|
| 6 | 1 |   |   |   |   |   |
| 5 |   |   |   |   |   |   |
| 4 | 1 |   | 1 | 1 | 1 | 0 |
| 3 | 1 | 1 | 1 | 2 | 1 | 0 |
| 2 | 1 | 1 | 1 | 1 | 1 | 1 |
| 1 | 0 | 0 | 0 | 1 | 0 | 0 |

Fig. 11A

|   | 6 | 5 | 4 | 3 | 2 | 1 |
|---|---|---|---|---|---|---|
| 6 | 1 |   |   |   |   | 0 |
| 5 |   |   |   |   |   |   |
| 4 | 1 |   | 3 | 1 | 1 | 0 |
| 3 | 1 | 1 | 1 | 2 | 1 | 0 |
| 2 | 1 | 1 | 1 | 1 | 1 | 1 |
| 1 | 0 | 0 | 0 | 1 | 0 | 0 |

Fig. 11B

|   | 6 | 5 | 4 | 3 | 2 | 1 |
|---|---|---|---|---|---|---|
| 6 | 4 | 3 | 2 | 1 | 1 | 0 |
| 5 | 3 | 3 | 2 | 1 | 1 | 0 |
| 4 | 3 | 2 | 3 | 1 | 1 | 0 |
| 3 | 1 | 1 | 1 | 2 | 1 | 0 |
| 2 | 1 | 1 | 1 | 1 | 1 | 1 |
| 1 | 0 | 0 | 0 | 1 | 0 | 0 |

Fig. 11C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62138543 B
- US 61973125 B
- US 31430714
- US 62155415
- US 20140223565 A

### Non-patent literature cited in the description

- **COLLBERG.** *Dynamic Graph-Based Software Fingerprinting*
- **L. PAGE et al.** *The PageRank Citation Ranking: Bringing Order to the Web,* 1999
- **S. NEEDLEMAN et al.** A general method applicable to the search for similarities in the amino acid sequence of two proteins. *Journal of Molecular Biology,* vol. 48 (3), 443-53